# EUROPÄISCHE PATENTANMELDUNG

(11) **EP 1 286 122 A2**
(43) Veröffentlichungstag der Anmeldung: **26.02.2003**
(21) Anmeldenummer: 02017224.3
(22) Anmeldetag: 31.07.2002
(51) Int. Cl.: F25B 49/00, F25D 29/00, H02P 1/44

(54) **Kühl- und Gefriergerät**

(30) Priorität: 21.08.2001 DE 20113805 U
(71) Anmelder: LIEBHERR-HAUSGERÄTE GMBH, 88416 Ochsenhausen (DE)
(72) Erfinder: Herbert Gerner, 88416 Erlenmoos (DE)
(74) Vertreter: Thoma, Michael

(57) **Zusammenfassung**

Kühl- und/oder Gefriergerät mit einem elektrischen Antrieb, der einen Spaltpolmotor (3) aufweist, und einer Steuereinrichtung (4) zur Ansteuerung des Spaltpolmotors (3), wobei die Steuereinrichtung (4) eine Spannungs-Steuereinheit (5) zur Ansteuerung des Spaltpolmotors (3) mit veränderbarer Spannung umfasst.

## Beschreibung

Die vorliegende Erfindung betrifft Kühl- und/oder Gefriergeräte mit einem elektrischen Antrieb, der einen Spaltpolmotor aufweist, und einer Steuereinrichtung zur Ansteuerung des Spaltpolmotors.

Einphasige Induktionsmotoren mit einer kurzgeschlossenen Hilfswicklung im Bereich der Polteilungen, sogenannte Spaltpolmotoren, werden bei Kühlschränken bzw. Gefriertruhen zum Antrieb des Ventilators benutzt. Sie können direkt an der Netzspannung betrieben bzw. durch eine Steuereinrichtung ein- und ausgeschaltet werden. Ungünstig bei derartigen Kühl- bzw. Gefriergeräten, deren Ventilator zyklisch ein- und ausgeschaltet wird, ist es jedoch, dass solche Spaltpolmotoren ein ungünstiges Anlaufverhalten zeigen. Da der Anlauf der Motoren bei Netzspannung durch den Hersteller garantiert sein muss, ergeben sich für den Motor energetische Nachteile für den späteren Betriebspunkt. Der Energieverbrauch ist typischerweise relativ hoch. Ferner sind durch den Betriebspunkt Drehzahl und damit verbunden auch die Geräuschentwicklung festgelegt.

Der vorliegenden Erfindung liegt daher die Aufgabe zugrunde, ein verbessertes Kühl- bzw. Gefriergerät der eingangs genannten Art anzugeben, das Nachteile des Standes der Technik vermeidet und letzteren in vorteilhafter Weise weiterbildet. Insbesondere soll ein verbesserter Energieverbrauch sowie eine Geräuschreduzierung beim Betrieb unter Normalbedingungen erreicht werden.

Erfindungsgemäß wird diese Aufgabe durch ein Kühl- bzw. Gefriergerät gemäß Schutzanspruch 1 gelöst. Vorteilhafte Ausgestaltungen der Erfindung sind Gegenstand der abhängigen Ansprüche.

Erfindungsgemäß ist also vorgesehen, dass die Steuereinrichtung eine Spannungs-Steuereinheit zur Ansteuerung des Spaltpolmotors mit veränderbarer Spannung umfasst. Im Gegensatz zum Stand der Technik wird der Motor von der Steuereinrichtung nicht nur ein- und ausgeschaltet. Die Spannungs-Steuereinheit verändert die Spannung, die an den Spaltpolmotor gelegt wird, um dessen Drehzahl und Leistungsaufnahme zu beeinflussen und hierdurch den Energieverbrauch und die Geräuschemission zu optimieren.

Vorteilhafterweise liegt die am Spaltpolmotor angelegte Betriebsspannung im Normalbetrieb des Geräts unterhalb der Nennspannung des Spaltpolmotors. Unter Nennspannung wird dabei die höchste Spannung verstanden, nach der der Spaltpolmotor bemessen ist. Um die Anlaufcharakteristik des Motors zu verbessern, kann eine Anlaufsteuerung vorgesehen sein, die beim Anlaufen des Spaltpolmotors die an diesen gelegte Spannung gegenüber dem Normalbetrieb anhebt. Hierdurch kann eine beträchtliche energetische Optimierung erreicht werden. Die Motoren können ohne Berücksichtigung des Anlaufs auf ein energetisches Optimum im späteren Betriebspunkt ausgelegt werden. Der Anlauf wird durch entsprechende Anpassung der Spannung während einer gewissen Zeit gewährleistet. Durch den Betriebspunkt unterhalb der Nennspannung des Spaltpolmotors kann im Normalbetrieb eine Energieeinsparung gegenüber Motoren erzielt werden, die mit Nennspannung im Normalbetrieb fahren. Darüber hinaus kann die Geräuschentwicklung minimiert werden.

In Weiterbildung der Erfindung steuert die Steuereinrichtung den Spaltpolmotor in Abhängigkeit von Geräteparametern des Kühl- bzw. Gefriergeräts automatisch. Die Steuereinrichtung kann eine Erfassungseinrichtung zur Erfassung von Gerätefunktionen und/oder eines Gerätebelastungszustands aufweisen, wobei die Spannungs-Steuereinrichtung die am Spaltpolmotor anliegende Spannung in Abhängigkeit der erfassten Gerätefunktionen bzw. des erfassten Gerätebelastungszustands steuert. Insbesondere kann z. B. im Falle eingeschalteter Gerätezusatzfunktionen wie der z. B. an sich bekannten Superfrostfunktion oder bei einer erhöhten Gerätebelastung die an den Spaltmotor angelegte Spannung gegenüber dem Normalbetrieb hin angehoben werden. Um die beim Betrieb mit Nennspannung dann vorhandene Drehzahlreserve zu nutzen, kann die Spannungs-Steuereinheit die am Spaltpolmotor anliegende Spannung bis zu dessen maximaler Nennspannung hochfahren.

Die Spannungs-Steuereinheit kann grundsätzlich unterschiedlich ausgebildet sein. So kann sie stufenlos arbeitend ausgebildet sein, um eine feine Anpassung der Drehzahl und Leistungsaufnahme des Motors an die Gegebenheiten zu erreichen.

Nach einer weiteren Ausführung der Erfindung arbeitet die Spannungssteuereinrichtung stufig. Insbesondere kann mit dem Spaltpolmotor ein Kondensator in Reihe geschaltet sein, der von einer Überbrückung überbrückbar ist. Die genannte Überbrückung wird von der Spannungssteuereinrichtung geöffnet bzw. geschlossen. Durch die Überbrückung des Kondensators wird der Ventilator mit der aktuell vorhandenen Netzspannung verbunden. Durch Öffnen der Überbrückung kann in Abhängigkeit der Dimensionierung des Kondensators eine Absenkung der Spannung oder eine Anhebung der Spannung erreicht werden. Anstelle eines einzelnen Kondensators kann auch eine Verschaltung von mehreren Kondensatoren bzw. ein Kondensatornetzwerk vorgesehen sein. Mit einer solchen Kondensatorschaltung können sowohl eine Spannungsanhebung als auch eine Spannungsabsenkung realisiert werden. Um mehrstufige Spannungsanhebungen oder -absenkungen zu realisieren, kann das Kondensatornetzwerk entsprechend mehrstufig erweitert werden. Dementsprechend kann stets die gewünschte Spannung an den Spaltpolmotor gelegt werden. Eine Anhebung der Spannung kann z. B. zum Anlaufen des Motors oder für vorübergehend höhere Belastungen des Kühl- bzw. Gefriergeräts genutzt werden. Es kann hingegen eine Spannungsabsenkung erwirkt werden, um den Spaltpolmotor im Normalbetrieb bei abgesenkter Spannung zu fahren.

Nachfolgend wird die Erfindung anhand eines bevorzugten Ausführungsbeispieles und einer zugehörigen Zeichnung näher erläutert. Die Zeichnung zeigt:
- Fig. 1: ein Kühlgerät mit Spaltpolmotor zum Antrieb eines Ventilators nach einer bevorzugten Ausführung der Erfindung in schematischer Darstellung, und
- Fig. 2: eine alternative Kondensatorschaltung.

Das in der Zeichnung dargestellte Kühl- bzw. Gefriergerät kann ein Kühlschrank für Haushalte sein. Im speziellen kann es ein Kühlgerät mit sogenannten No-Frost-Fächern sein, für das sich der erfindungsgemäße Spaltpolmotor-Antrieb besonders eignet.

Das Kühl- bzw. Gefriergerät 1 umfasst einen Ventilator 2, der von einem Spaltpolmotor 3 angetrieben wird. Eine Steuereinrichtung 4 steuert den Betrieb des Spaltpolmotors 3 und schaltet insbesondere diesen ein und aus.

Wie die Zeichnung zeigt, umfasst die Steuereinrichtung 4 eine Spannungs-Steuereinheit 5, die die am Spaltpolmotor 3 anliegende Spannung verändert, um den Betrieb des Motors 3 zu steuern. In Reihe mit dem Spaltpolmotor 3 ist ein Kondensator 6 geschaltet, durch den die am Motor anliegende Spannung verändert werden kann. Um die Spannungsänderung durch den Kondensator 6 zu kompensieren bzw. um die Netzspannung am Ventilator anzulegen, kann der Kondensator 6 durch eine Überbrückung 7, die von der Spannungs-Steuereinheit 5 gesteuert wird, überbrückt werden.

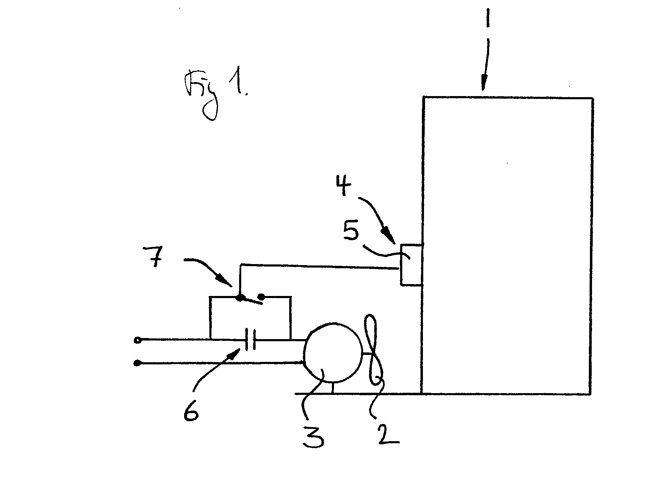

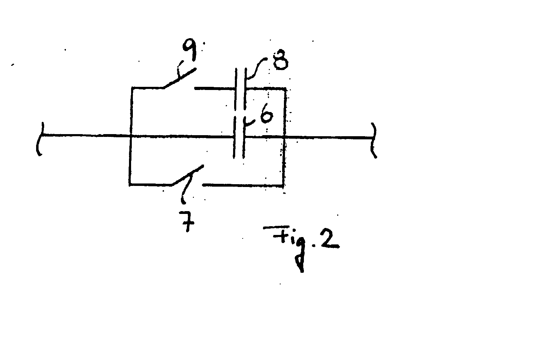

Anstelle des Kondensators 6 in Figur 1 kann auch eine Verschaltung von mehreren Kondensatoren vorgesehen sein. Dies zeigt Figur 2. Ein zweiter Kondensator 8 ist zu dem Kondensator 6 parallel geschaltet bzw. über einen Schalter 9 parallel schaltbar, d.h. zuschaltbar und abtrennbar. Hierdurch ergeben sich im wesentlichen drei Schaltzustände. Ist der Überbrückungsschalter 7 geschlossen, wird die aktuelle Netzspannung an den Spaltpolmotor gegeben. Sind die Schalter 7 und 9 beide offen, kann eine Spannungsabsenkung erreicht werden. Bei geschlossener Stellung des Schalters 9 und offener Stellung des Überbrückungsschalters 7 kann hingegen eine Spannungsangebung erreicht werden.

Der Betrieb des Ventilators kann hiermit folgendermaßen gesteuert werden:

Um den Spaltpolmotor 3 anlaufen zu lassen, kann die Steuereinrichtung 4 die am Spaltpolmotor 3 anliegende Spannung gegenüber Normalbetrieb anheben. Insbesondere kann die Spannung auf die Nennspannung des Spaltpolmotors 3 angehoben werden.

Die an dem Motor anliegende Spannung kann nach dem Anlaufen abgesenkt werden. Hierzu kann die Steuereinrichtung 4 bzw. die Spannungs-Steuereinheit 5 die Überbrückung 7 und den zweiten Schalter 9 gemäß Figur 2 öffnen, so dass der Motor in Reihe mit dem Kondensator geschaltet ist und dementsprechend die Betriebsspannung abgesenkt wird. Die Betriebsspannung wird also für den Normalbetrieb des Ventilators unterhalb der Nennspannung des Spaltpolmotors gefahren.

Werden im Betrieb des Geräts zusätzliche Gerätefunktionen wie z. B. ein Superfrostbetrieb mit abgesenkter Gefrierfachtemperatur aktiviert oder tritt eine gegenüber dem Normalbetrieb erhöhte Gerätebelastung z. B. durch Befüllung des Kühlschranks mit noch warmem Kühlgut auf, kann vorübergehend die Drehzahl und die Leistungsabnahme des Ventilators erhöht werden. Die Steuereinrichtung 4 erfasst über in der Zeichnung nicht eigens dargestellte Erfassungsmittel die genannten zusätzlichen Gerätefunktionen und/oder den Gerätebelastungszustand. Ist der Superfrostbetrieb aktiviert oder tritt eine erhöhte Gerätebelastung auf, hebt die Spannungs-Steuereinheit 5 die am Spaltpolmotor 3 anliegende Spannung durch Betätigung der Schalter 7 und 9 vorübergehend an.

Selbstverständlich kann auch vorgesehen sein, dass bei besonders niedriger Gerätebelastung die am Spaltpolmotor anliegende Spannung noch weiter gegenüber dem Normalbetriebspunkt abgesenkt wird. Dies kann beispielsweise durch weitere Kondensatoren oder ähnliche Spannungssteuermittel erreicht werden.

## Patentansprüche

1. Kühl- und/oder Gefriergerät mit einem elektrischen Antrieb, der einen Spaltpolmotor (3) aufweist, und einer Steuereinrichtung (4) zur Ansteuerung des Spaltpolmotors, **dadurch gekennzeichnet, dass** die Steuereinrichtung (4) eine Spannungs-Steuereinheit (5) zur Ansteuerung des Spaltpolmotors (3) mit veränderbarer Spannung umfasst.

2. Gerät nach dem vorhergehenden Anspruch, wobei die am Spaltpolmotor (3) angelegte Spannung im Normalbetrieb des Geräts unterhalb einer Nennspannung des Spaltpolmotors (3) gefahren ist.

3. Gerät nach einem der vorhergehenden Ansprüche, wobei die Steuereinrichtung (4) eine Erfassungseinrichtung zur Erfassung von Gerätefunktionen und/oder eines Gerätebelastungszustands aufweist und die Spannungssteuereinrichtung (5) die am Spaltpolmotor (3) anliegende Spannung in Abhängigkeit erfasster Gerätefunktionen und/oder Gerätebelastungszustände steuert.

4. Gerät nach einem der vorhergehenden Ansprüche, wobei im Falle eingeschalteter Gerätezusatzfunktionen und/oder erhöhter Gerätebelastung die an den Spaltpolmotor angelegte Spannung gegenüber Normalbetrieb zur Nennspannung des Spaltpolmotors hin angehoben ist.

5. Gerät nach einem der vorhergehenden Ansprüche, wobei die Spannungs-Steuereinheit (5) eine Anlaufsteuerung, die beim Anlaufen des Spaltpolmotors (3) die an diesen gelegte Spannung gegenüber Normalbetrieb anhebt, insbesondere auf dessen Nennspannung setzt, umfasst.

6. Gerät nach einem der vorhergehenden Ansprüche, wobei die Spannungs-Steuereinheit (5) stufenlos arbeitend ausgebildet ist.

7. Gerät nach einem der vorhergehenden Ansprüche 1 bis 5, wobei die Spannungs-Steuereinheit (5) stufig arbeitend ausgebildet ist.

8. Gerät nach dem vorhergehenden Anspruch, wobei mit dem Spaltpolmotor (3) zumindest ein Kondensator (6) in Reihe geschaltet ist, der von einer Überbrückung (7) überbrückbar ist, und die Spannungssteuereinheit (5) die Überbrückung (7) ansteuert.

9. Gerät nach dem vorhergehenden Anspruch, wobei eine Schaltung mit mehreren Kondensatoren (6, 8) zur Spannungssteuerung vorgesehen ist.
